Europäisches Patentamt

European Patent Office

Office européen des brevets

(19)

(11) **EP 1 170 572 A2**

(12) **EUROPEAN PATENT APPLICATION**

(43) Date of publication:
09.01.2002 Bulletin 2002/02

(51) Int Cl.7: **G01B 11/24**

(21) Application number: **01660129.6**

(22) Date of filing: **28.06.2001**

(84) Designated Contracting States:
**AT BE CH CY DE DK ES FI FR GB GR IE IT LI LU
MC NL PT SE TR**
Designated Extension States:
**AL LT LV MK RO SI**

(30) Priority: **30.06.2000 FI 20001568**

(71) Applicant: **Thermo Radiometrie Oy
90570 Oulu (FI)**

(72) Inventor: **Keränen, Heimo
90240 Oulu (FI)**

(74) Representative: **Antila, Harri Jukka Tapani
Kolster Oy Ab, Iso Roobertinkatu 23
00120 Helsinki (FI)**

(54) **Apparatus and method for determining surface shapes**

(57) The invention relates to a method and a measuring arrangement. The method comprises radiating optical radiation at a first moment in time to a surface area of the surface of the object from a radiation direction, the radiation being part of optical radiation comprising different intensities at different points of its intensity profile. The surface area is imaged to generate image information by performing the imaging from an imaging direction that deviates from said radiation direction by a known direction difference. Said radiation and imaging is performed at least at two other moments in time. An intensity value ratio is generated from intensity values comprised by the imaging information generated from the radiated surface area, the ratio determining the point on the intensity profile. The height of the surface area is determined for determining the shapes of the surface of the object.

FIG. 1

EP 1 170 572 A2

Printed by Jouve, 75001 PARIS (FR)

## Description

FIELD OF THE INVENTION

The invention relates to a method and an optical measurement arrangement implementing the method of determining the shapes of a surface of an object. The object may e.g. a rolled metal product or an electronics circuit board.

BACKGROUND OF THE INVENTION

In a prior art solution disclosed in WO 99/58930, the 3D properties of a surface of an object are determined with an optical measurement arrangement as follows. A first light source, a mask and optics are used to generate a light pattern comprising a plurality of parallel light stripes onto the surface of the object. At least two light stripes are from different wavelength ranges, i.e. in different colours. Each light stripe has a gradual variation in intensity. A matrix camera takes images of the illuminated surface of the object. In image processing, one light stripe is identified and located, based on its colour, on the surface of the object. Once one light stripe is located, other light stripes on the surface of the object can be identified. The 3D coordinates of the identified light stripes can be determined in trigonometric triangulation. In said trigonometric triangulation, the prior art solution requires certain geometric data, such as the distance between the light source and the camera. Furthermore, in trigonometric triangulation, the prior art solution requires an illumination intensity curve as a function of distance. The geometric data and the illumination intensity curve are used for light stripe-specific determination of the 3D coordinates of the surface of the object. For each light stripe, 3D coordinates can be determined for as many pixels as the matrix camera has pixels in the direction of a light stripe.

A drawback in said prior art solution is the pixel accuracy limitation caused by a matrix camera. The number of pixels in present commercially available matrix cameras is at most 1200*1000 pixels, i.e. a 1200 mm wide area, for example, can be scanned using at most 1200 pixels, i.e. pixel accuracy is 1 mm, which is not sufficient in all applications. A practical limitation in the manufacture of larger matrix cameras is first of all their too large physical size for certain purposes of use and the extremely high computational capacity required by them, which often means unreasonably high costs.

Another drawback in said prior art solution is errors caused by background light and errors caused by the reflectivity of the surface of the object in the 3D coordinates to be determined. To reduce said errors, the prior art solution uses a first light source for generating illumination having a uniform intensity profile. The greater the errors caused by background light or reflectivity, the stronger the illuminations created with the first and the second light source have to be. To reduce the errors caused by the reflectivity of the surface, the prior art solution generates a third and fourth light source and a mask and optics associated therewith to generate a corresponding illumination onto the surface of the object as was described for the first and second light sources, but symmetrically from one side of the camera. To eliminate errors caused by background light, the prior art solution uses light sources having illumination strengths that are much stronger than those of background light.

It can thus be stated that the drawback in said prior art solution is its complexity, and associated excessive size and cost when the aim is good accuracy in determining 3D coordinates and, thereby, surface shapes.

BRIEF DESCRIPTION OF THE INVENTION

The object of the invention is thus to provide a method and an optical measurement arrangement implementing the method so as to achieve good measurement accuracy with an optical measurement arrangement having a practical size. This is achieved with the method and arrangement of the invention for determining the shapes of a surface of an object.

The invention relates to a method and an arrangement for determining the shapes of a surface of an object. The characteristics of the method and arrangement of the invention are disclosed in the independent claims.

The preferred embodiments of the invention are disclosed in the dependent claims.

The invention is based on radiating optical radiation onto a surface area of a surface of an object and imaging the surface area such that at least three sets of image information are generated about the surface area of the object. Said sets of image information comprise information on the intensities of optical radiation on the surface area with respect to the generation of each set of image information. The image information can also be generated based on wavelength separation, wherein separate sets of image information are generated for optical radiations on different wavelengths. The ratio of the intensity values comprised by the image information can be used to determine the height of the surface area based on triangulation, provided the direction difference between the optical radiation directed at the surface area and the imaging direction is known. Furthermore, the optical radiation has to remain similar such that the intensity value ration remains the same between each two different parts of the intensity profiles or the parts of the intensity profiles, the optical radiations according to which are used to radiate the surface area from which said image information is generated. When the heights of the surface areas of the surface, the areas typically being small pixel-like surface areas, are determined, the heights of the surface areas can be used to determine the surface shapes.

The method of the invention and the optical measurement arrangement implementing the method can be used to determine the surface shapes at good pixel accuracy also from a broad surface, such as a broad metal plate. Background light and surface reflectivity create no problem. The size of the optical measurement arrangement according to the invention does not limit its uses. The preferred embodiment of the invention can be crystallized as follows. A moving object is illuminated at a skew angle on an immobile sinusoidal illumination pattern. The phase angle (phase shift) of the sine pattern is measured by means of three camera images to calculate 3D shapes. The camera images are taken such that the imaging points are located at a 120-degree phase shift with respect to the sine pattern. This way each surface point is imaged three times such that the object is illuminated in different areas of the sine pattern at each imaging moment. These areas are about 120-degrees from each other. Three-fold imaging can be carried out with e.g. a 3-line line camera or by using a colour camera and three differently coloured sine light patterns at a 120-degree phase shift. In the case of a colour camera, a matrix camera can also be used. A constant illumination pattern (sine pattern) is used. The method utilizes the different subareas of the sine pattern such that a line camera images different points of the sine pattern. The movement of the imaging object (e.g. a metal surface) is measured and the image times are synchronized such that exactly the same surface point is imaged three times. Each imaging time, the point is illuminated in a different subarea of the sine pattern. In the invention, the phase of the sine pattern is determined in three different measurements, so the result is not at all affected by the intensity of the sine pattern, the reflectivity of the surface point, the intensity of the sine pattern or the camera's offset values. In known solutions, when the ratio of the images is calculated, background light or the camera's offset values affect the result. In the invention, the illumination pattern is repeated several times due to the sinusoidal form, for example. This allows the device to measure in a wide height area, not only at a given point of the intensity profile. In addition, the light patterns should remain in stable positions with respect to each other and the intensity ratios should also be known. In principle, generating one fixed illumination pattern is easier and less expensive. The mutual distance between the different imaging points should remain constant. This, again, is easy when e.g. a 3-line detector is used, wherein the image areas are determined by the geometry of the image detector. In practice, the entire image detector may be one integrated CCD microcircuit. The applicant has observed that a sine pattern is most suitable, since no discontinuities are created in the illumination. From the point of view of the calculation principle, the same measurement resolution is obtained as at any point of a sine pattern. In addition, a sine pattern has the advantage that summing up all 3 images, taken at different sine phases (the phase differences of the pattern with respect to each other 120 and 240 degrees), results in constant illumination. Mathematically, the sum of said sine components is always = 1 irrespective of the phase at each given time. This sum pattern can be used to generate a normal 2-d image. The system thus gives simultaneously an error-free 2d image (i.e. a normal image) and a 3D map, wherein the height of each image pixel is known. The sine pattern has the additional advantage that blurring of the illumination pattern due to e.g. optical aberration does not affect the shape of the sine pattern, only its amplitude. The change in amplitude, again, does not at all affect the measurement result. Other shapes of the illumination pattern may be some special cases, whereby a special characteristic relating to the measurement situation is achieved. In practice, it may sometimes be advantageous that the distance between the imaging areas is 120 + N*360 degrees. In this case, the different imaging areas area not taken from the same sine sequence. This allows the use of a denser sine pattern with respect to the distance between the imaging areas, whereby the measurement becomes much more sensitive. The distance between the imaging areas is determined from the properties of the detector, but the size of the sine pattern can be easily changed with different optics. In principle, other angles would also work. It is essential that the number of imagings is adequate, that background light, the intensity of the illumination pattern and any offset level in the illumination pattern itself (i.e. the illumination effect of the dark area in the illumination pattern is not zero, but the illuminator lets through some light even in the dark area) is compensated for. A matrix camera may also be used. In this case, the imaging is carried out such that the illumination remains constant (e.g. as a sine patterm), but the image is taken three times from the same point. Imaging moments are synchronized with movement speed and sine pattern sequence length such that between different imaging moments, a surface point has moved e.g. 120 degrees and e.g. 240 degrees with respect to the sine pattern. This enables the imaging of a large surface area using one matrix image.

BRIEF DESCRIPTION OF THE FIGURES

In the following, the invention will be described in detail in connection with preferred embodiments with reference to the accompanying drawings, in which

Figure 1 shows a first preferred embodiment of the invention,
Figures 2A to 2E show intensity profiles of optical radiation,
Figure 3 shows the structure of an optical block,
Figure 4 shows an exemplary situation associated with triangulation,
Figure 5 shows a second preferred embodiment of the invention,
Figure 6 shows examples of the intensity profiles according to a second preferred embodiment of the invention,

Figure 7 shows the relation between height and an intensity profile,

Figure 8 shows a third preferred embodiment of the invention,

Figure 9 shows the structure of an optical block in the third preferred embodiment of the invention.

DETAILED DESCRIPTION OF THE INVENTION

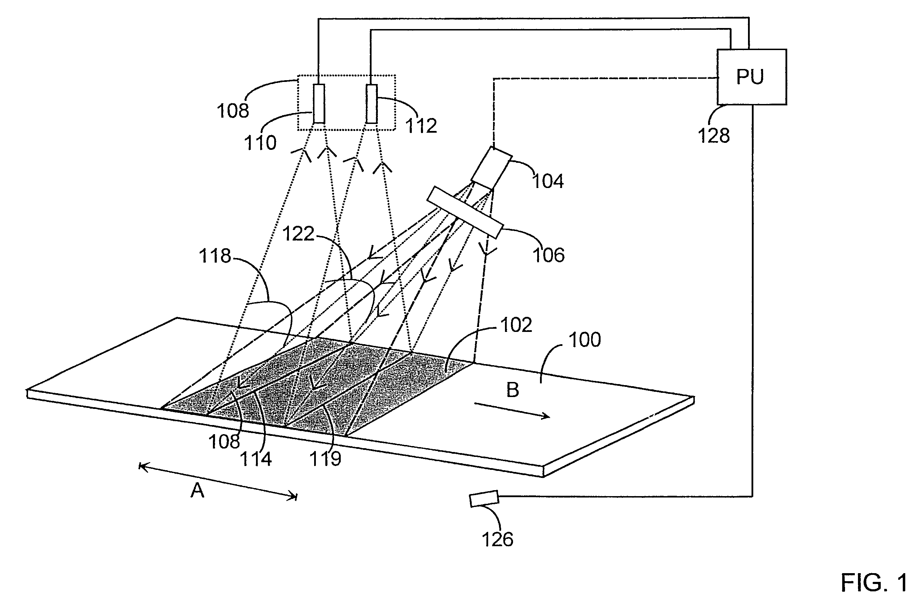

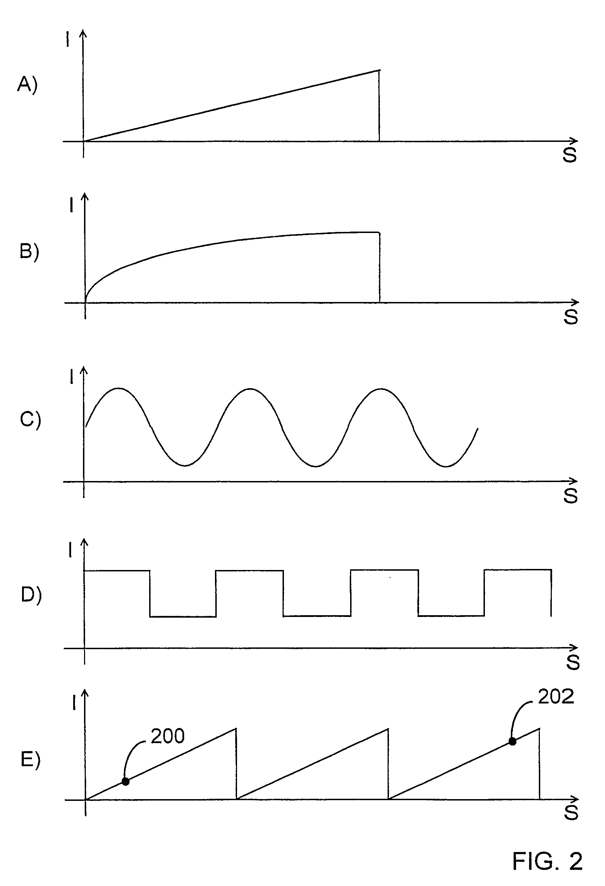

In a first preferred embodiment of the invention shown in Figure 1, substantially parallel optical radiation is radiated onto a surface of an object 100 using a radiation source 104 and an optical block 106, the intensity profile of the radiation having at least two kinds of intensity values. The object is e.g. a rolled metal product or an electronics circuit board. The radiation source may be e.g. an incandescent lamp, a semiconductor radiation source, a laser radiation source or a xenon radiation source. Herein, an intensity profile refers to the intensity profile of optical radiation directed in the longitudinal direction of the surface of the object, shown by double arrow A. Figures 2A to 2D show examples of the intensity profile of optical radiation, applicable in this and other embodiments of the invention. The I-axis is the intensity axis, and the S-axis the distance axis. Figures 2A to 2E show a linear intensity profile in Figure 2A, an intensity profile showing non-linearity in Figure 2B, a sinusoidal intensity profile in Figure 2C, an edged intensity profile in Figure 2D, and, in Figure 2E, an intensity profile showing linear serial intensity profiles.

In the first preferred embodiment of the invention shown in Figure 1, there is a movement between the intensity profile of optical radiation and the object 100, and the movement can be quite fast without any impairment in the performance of the arrangement of the invention. The upper limit for speed is primarily set by the maximum imaging frequency of the image detector used. The movement is typically caused by the object being moving, as in Figure 1, wherein the movement of the object is denoted by arrow B. The movement may also be caused by the movement of the radiation source 104 or the optical block 106 or both.

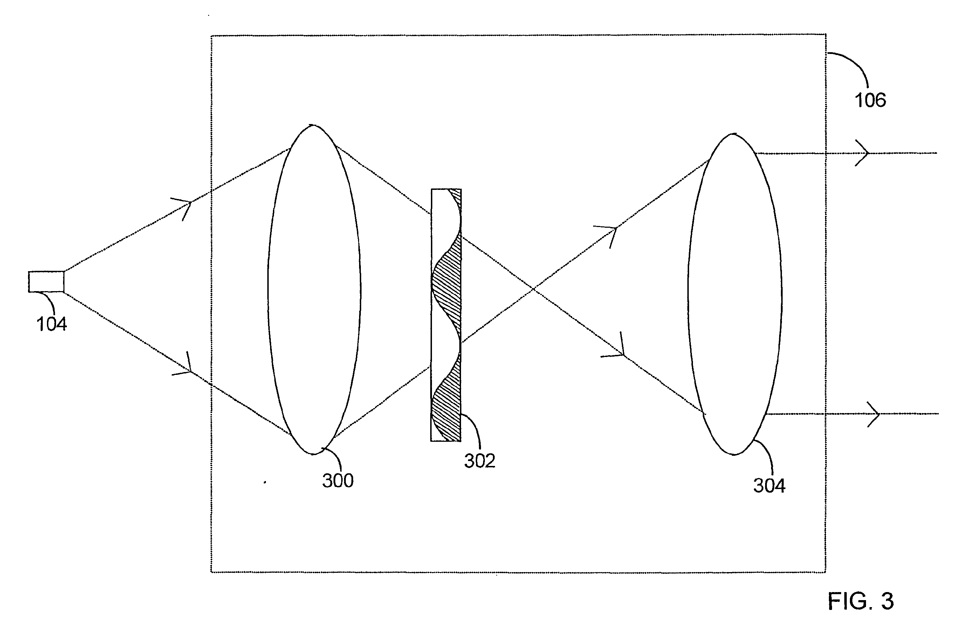

As an example of creating the intensity profile of optical radiation, the creation of the sinusoidal intensity profile in Figure 2C is shown at the optical block in Figure 3, wherein the optical radiation transmitted by the radiation source 104 is refracted with a first lens 300 via a light mask 302 to a second lens 304, which collimates, i.e. parallels the optical radiation onto the surface of the object 100. The shape of the intensity profile of optical radiation is generated in the light mask. Changing the structure of the light mask allows the shape of the intensity profile to be changed. One way to create movement between the intensity profile and the surface of the object is to move the light mask in the optical block.

Figure 1 shows a radiated surface imaged with image detectors 110, 112, typically line cameras, of an imaging block 108. A first image detector 110 images a radiated line-like surface area 114. Said imaging is carried out from an imaging direction having a direction difference 118 with respect to the radiation direction, known to the arrangement. The known direction difference can be between 5 and 85 or 95 and 175 degrees. The direction difference is preferably between 30 and 70 or 110 and 150 degrees. In other words, the direction difference can be a 5-degree deviation, preferably at least a 20 to 30-degree deviation, from a 0 to 2-fold multiple of a quadrant. The direction difference affects the maximal measurement depth and measurement accuracy achieved by the solution of the invention. A large direction difference results in better measurement accuracy but a smaller maximal measurement depth than a small direction difference. Said direction difference does not necessarily have to be known exactly, a quite rough estimate of said direction difference is sufficient for the solution of the invention.

The image detector 110, 112 may comprise for example 4000 pixels for imaging a line-like surface area. The line-like surface area comprises adjacent surface areas having an area of 0.001 to 25 square millimetres. The surface area is typically a pixel-like surface area, whose area is preferably between 0.01 and 1 square millimetre. For example, if the length of the line-like surface area is 1000 mm, said imaging achieves 0.25-mm pixel accuracy in the longitudinal direction of the line-like area, which is a substantially perpendicular direction with respect to the movement between the intensity profile and the surface of the object 100. Pixel accuracy in the direction of said movement is also typically 0.25 mm because a pixel typically depicts a square area. Thus, one pixel depicts e.g. said 0.25*0.25 mm surface area on said line-like surface area to generate image information. Image information comprises information on the intensity of optical radiation on the imaged surface area at the time of imaging. Said intensity is part of said optical radiation intensity profile. Since each of the 4000 pixels performs said imaging, the total length of said 1000-mm long line-like surface area can be imaged.

After the line-like surface-area moves to the imaging area 119 of a second image detector 112, the second image detector 112 images said surface area 114 in the same way as was described for the first image detector 110 to generate image information. The second image detector 112 images the surface area 114 from an imaging direction having a known direction difference 122 with respect to the radiation direction. In a preferred embodiment of the invention, said direction difference 122 is typically substantially equal to the direction difference 118 described for the first image detector, but said direction differences may also be unequal. In the same way as the pixel of the first image detector 110, the pixel of the second image detector 112 generates image information about said 0.25*0.25-mm surface area. The image information comprises information on the intensity of the optical radiation in the imaged surface area at the time of imaging. Said intensity is another part of said optical radiation intensity profile than the intensity comprised by the image information generated in the imaging carried out by the first image detector 110.

With respect to time, the intensity profile of optical radiation should be substantially constant-shaped between the above imagings carried out by the first image detector 110 and the second image detector 112. In addition, the distance on the intensity profile between the parts of the intensity profiles in the radiations according to which the surface area 114 is imaged with the first image detector 110 and the second image detector 112 has to be known to the arrangement. Said distance is found out for example by specifying the distance between the imaging areas of the image detectors 110, 112 on the surface of the object and thus finding out the distance on the intensity profile. The distance with respect to the intensity profile may also be found out directly.

The solution of the invention can also be implemented in a situation according to Figure 2E, involving a series of intensity profiles. The first image detector 110 performs the surface area imaging at a given point 200 of the first intensity profile. The second image detector 112 carries out the surface area 114 imaging in the radiation area of some other intensity profile in the series. Said intensity profiles have to be equal such that they are substantially constant-shaped with respect to time and each other. Furthermore, the distance between said given point on the first intensity profile and point 202, where the second image detector 112 performs the imaging on said other intensity profile has to be known. Said distance is typically determined using one intensity profile that is substantially constant-shaped with respect to time, i.e. as if said points on the intensity profiles were on the same intensity profile that is constant-shaped with respect to time and on which the distance between the points is known.

A movement sensor 126 measures the movement between the object 100 and the intensity profile to generate control information. The image detectors 110, 112 can be directed based on the control information to image such that the same surface area is imaged in the imaging areas of both the first image detector 110 and the second image detector 112 to generate said image information. Said control is typically carried out via a processing unit 128. The processing unit is a processor-based device, such as a computer. The image detectors can also be controlled, based on the control information, from the imaging block.

The image information generated in imagings performed with the first image detector 110 and the second image detector 112 is transferred to the processing unit 128. The image information may also be generated in the processing unit, based on the imagings. The ratio of the intensity values composed by said image information is formed in the processing unit and used to determine the point on the intensity profile, corresponding to the height of the surface area. The height of the surface area, e.g. said 0.25*0.25 mm surface area, is determined in the processing unit based on the ratio of the intensity values, said known direction differences between imaging directions and radiation directions and said known distance on the intensity profile, utilizing triangulation.

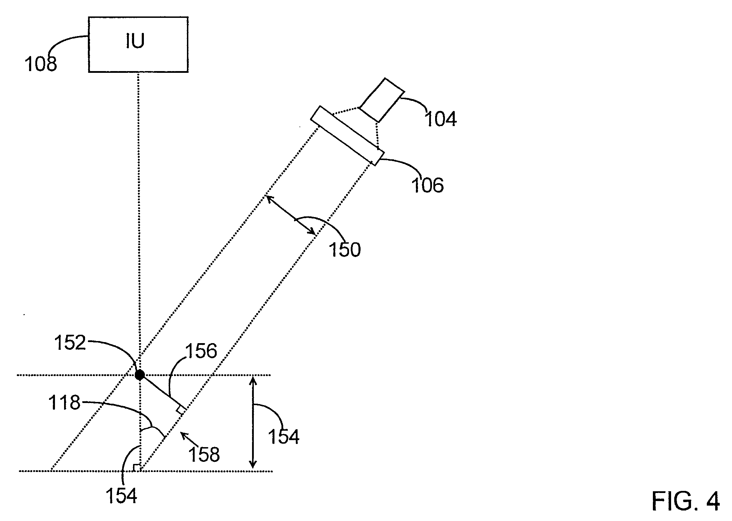

Figure 4 shows an exemplary situation associated with triangulation, wherein double arrow 150 denotes the width of an optical radiation intensity profile generated at the radiation source 104 and the optical block 106. Since said optical radiation is substantially parallel, said intensity profile width also remains substantially the same. Point 152 on the intensity profile is the point on the intensity profile corresponding to the height of the surface area. The location of said point, i. e. the distance 156 on the intensity profile is known in the arrangement, for example because the difference between the parts of the optical radiation with which the surface area is radiated, on the intensity profile is known. This way a typically rectangular triangle 158 is created, whose angle 118 is the known direction difference 118. Since the magnitudes of the two angles of said triangle, i.e. that of angle 118 and the right angle, and the length of one side 156 are known, the height 154 of the surface area can be determined in triangulation, i.e. calculation of distance, utilizing triangular measurement. Thus, triangulation provides a practical way to implement the calculation of the height of the surface area based on the information provided by the solution of the invention.

In a preferred embodiment of the invention, the processing unit 128 comprises a calibration file in which said other information required for determining the height of the surface area is stored in advance, with the exception of image information and the intensity values included therein. Necessary information on at least one known direction difference and at least one known distance on the intensity profile are stored in the calibration file in advance. The calibration file is typically created by running a calibration piece having gradual height variation through the arrangement of the invention, whereby the necessary information corresponding to each height of the surface area is found out. When said at least one direction difference and said known at least one distance on the intensity profile remain constant, the information required in the calibration file is the intensity value ratio corresponding to the height of the surface area. When the calibration file is created in said manner, the unknown height of the surface area can be determined by inputting the intensity values comprised by the imaging information generated in the imaging of said surface area in the processing unit, which generates the relation between the intensity values. The processing unit specifies the height of the surface area based on said relation and the information comprised by the calibration file. The use of a calibration file thus enables a rapidly operating implementation of the arrangement of the invention. In the preferred embodiment of the invention, triangulation is usually utilized in the generation and/or use of the calibration file, of which an example was presented above in connection with Figure 4.

Similarly, the processing unit determines the height of each surface area, in the example 4000 according to the number of pixels of the image detectors 110, 112. The determination of the heights of the surface areas allows the shapes of the surface of the object 100 to be determined in the line-like surface area, e.g. said 1000 mm long and 0.25 mm wide line-like surface area.

The first preferred embodiment of the invention is typically implemented by the image detectors 110, 112 imaging substantially simultaneously the different surface areas to generate image information. Based on the movement information obtained by the movement sensor 126, the processing unit 128 directs the image detectors to image such that each surface area imaged with the first image detector 110 will be imaged with the second image detector 112, and that all the surface areas of the object will be imaged in the above manner. In other words, all the shapes of the surface of the object are determined, since the line-like surface areas, by which the surface shapes are determined, cover the entire surface of the object at 100% coverage.

Next, the first preferred embodiment of the invention, shown in Figure 1, is presented in the case of a sinusoidal intensity profile, which can be implemented, as Figure 1 shows, with two image detectors 110, 112. However, the preferred embodiment is implemented using three image detectors. In this case, the surface of the object 100, radiated with optical radiation comprising a sinusoidal intensity profile, is imaged with three image detectors of imaging block 108, which are typically line cameras. The distance between the imagings of the surface area 114 is e.g. a third of a sinusoidal intensity profile sequence, i.e. 120 degrees. A known distance on the intensity profile is the magnitude of the phase shift according to said distance between imagings, i.e. in the above example 120 degrees. The surface area whose height is determined could be e.g. a corresponding 0.25*0.25-mm surface area on a 1000 mm long and 0.25 mm wide line-like surface area 114, as was presented above. The variations in signals S with respect to the height h of the surface area at the different phase shifts can be presented by the following formulas:

$$S(A) = P \cdot \sin(\tan(\alpha) \cdot \frac{h}{x} \cdot 360°) + K$$

$$S(B) = P \cdot \sin(\tan(\alpha) \cdot \frac{h}{x} \cdot 360° + \varphi_B) + K$$

$$S(C) = P \cdot \sin(\tan(\alpha) \cdot \frac{h}{x} \cdot 360° + \varphi_C) + K,$$

in said formulas P = amplitude of sinusoidal intensity profile, $\alpha$ = angle of arrival of radiation onto surface area, h = height of surface area, x = sequence length of sinusoidal intensity profile, $\varphi_B$ = phase difference be-

tween imagings A and B at the sinusoidal intensity profile, $\varphi_C$ = phase difference between imagings A and C at the sinusoidal intensity profile and K = offset value of sinusoidal intensity profile. The offset value represents the deviation from an ideal sinusoidal intensity profile. Said deviation is caused by non-idealities of the radiation source and background light. In the example, $\varphi_B$=120 degrees and $\varphi_C$=240 degrees. For example, the amplitude P of the sinusoidal intensity profile and the offset value K of the sinusoidal intensity profile do not necessarily have to be known in the determination of the height h, because two unknown factors can be eliminated from a set of three equations, allowing the third unknown factor, i.e. in this case the height h of the surface area, to be calculated. As can be noted from the above-described elimination of the offset value, the offset value causes no error in the determination of the height of the surface area. The height h can also be determined based on the phase difference between two imagings, i.e. based on two formulas, but the above three formulas generated with respect to the phase differences between three imagings can be used to determine the height h more accurately than by a determination based on one phase difference.

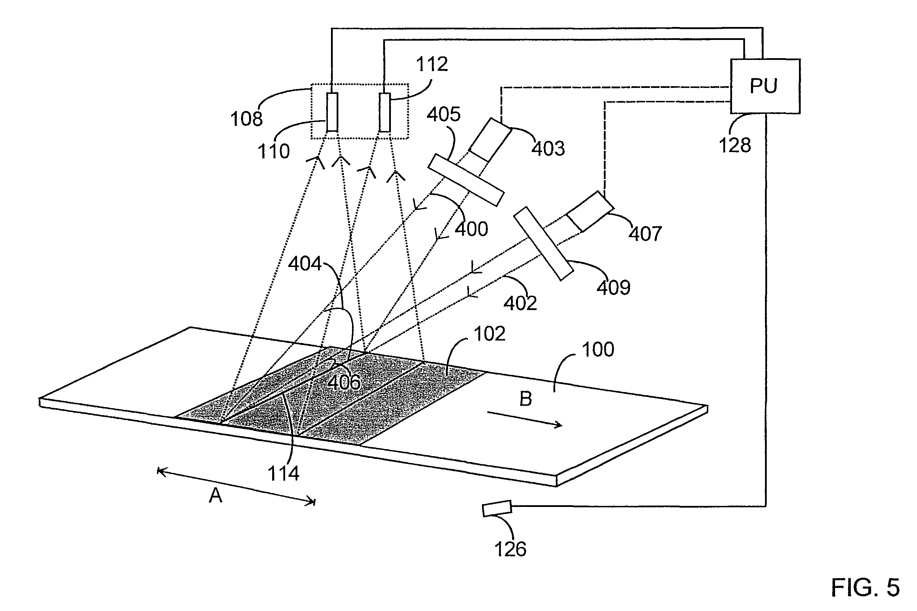

In a second preferred embodiment of the invention shown in Figure 5, the determination of the height of the surface area according to the first preferred embodiment of the invention is carried out with respect to a first radiation direction 400 and a second radiation direction 402. The second radiation direction is different from the first radiation direction. Optical radiation is generated on the surface of the object from the first radiation direction with a radiation source 402 and an optical block 405, and optical radiation is generated on the surface of the object from the second radiation direction with a radiation source 407 and an optical block 409. Said radiation sources and optical blocks may be similar to those presented in connection with the first preferred embodiment of the invention. The line-like surface area 114 can be imaged with the image detectors 110, 112, typically line cameras, of the same imaging block 108, whereby the imaging with respect to the different radiation direction is typically carried out at different times.

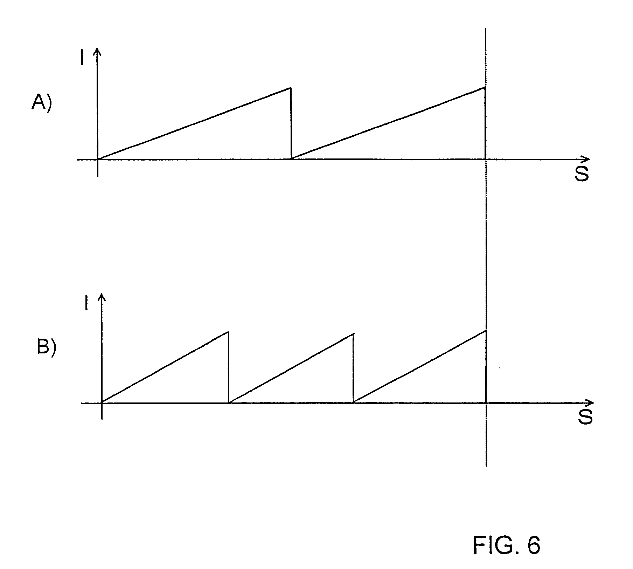

Figures 6A and 6B show examples of intensity profiles of optical radiations, radiated from different radiation directions onto the surface area. The I-axis is the intensity axis, and the S-axis the distance axis. The radiation shown in Figure 6A, radiated from a first radiation direction comprises intensity profiles in two sequences, whose sequence length is 3 mm. The radiation shown in Figure 6B, radiated from a second radiation direction comprises intensity profiles in three sequences, whose sequence length is 2 mm. In a preferred embodiment of the invention, radiation directions and intensity profile sequence lengths are selected such that intensity profile sequences of different lengths are projected equally long on the surface of the object, due to different incoming directions to the surface of the object.

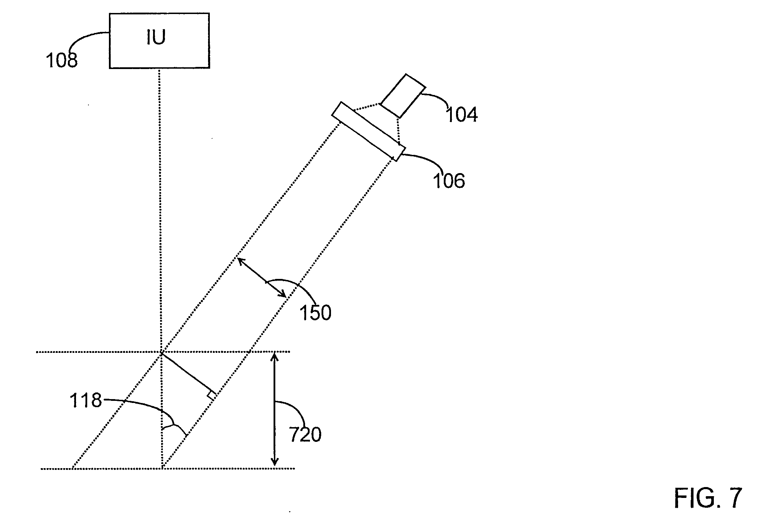

Seen from the imaging direction, the highest determinable height of the surface area, i.e. measurement depth with respect to radiation direction is determined by one intensity profile sequence length. Figure 7 illustrates this. In Figure 7, double arrow 150 denotes the width of an intensity profile sequence, and double arrow 720 denotes the highest height to be determined. Other reference numbers are as described for Figure 4.

Referring to Figure 5, the first radiation direction 400 is steeper with respect to the surface of the object than the second radiation direction 402. That is, the angle 404 between the surface area of the object 100 to be imaged and the first radiation direction 400 is greater than the angle 406 between the surface area of the object 100 to be imaged and the second radiation direction 402. Because of the above, the maximum measurement depth to be determined by the determination of the height of the surface area performed from the first radiation direction is greater than the one from the second radiation direction. However, the greater the measurement depth, the smaller is the height measurement resolution.

In the second preferred embodiment of the invention shown in Figure 5, the measurement resolution problem is solved as follows. A measurement result is generated from the height of the surface area in accordance with the first preferred embodiment of the invention with respect to the first radiation direction 400 and a measurement result is generated from the height of the surface area in accordance with the first preferred embodiment of the invention with respect to the second radiation direction 402, and said measurement results are then compared to determine the height of the surface area. In the second preferred embodiment of the invention, the maximum measurement depth is determined according to the lowest common denominator of the sequence lengths of the intensity profiles of optical radiations radiated from the first and second radiation directions. In our example, the sequence lengths were 2 mm and 3 mm, i.e. the lowest common denominator is 2 mm * 3 mm = 6 mm. In other words, the maximum measurement depth is 6 mm. An increase in the measurement depth is achieved at good measurement resolution since the measurement resolution is determined in accordance with the smallest measurement depth, which in the example is the measurement depth of the measurement carried out from the second radiation direction.

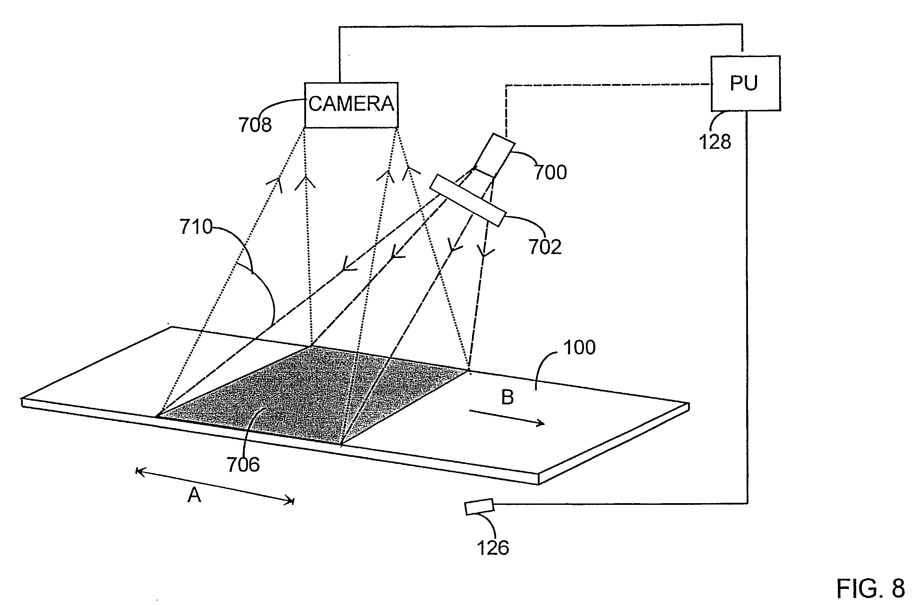

In a third preferred embodiment of the invention shown in Figure 8, optical radiation comprising optical radiation on at least two different wavelengths is directed to the surface of the object 100 with a radiation source 700 and an optical block 702 from a radiation direction. Typically, optical radiations on different wavelengths are generated on the surface of an object such that said radiations overlap on each surface area of the object to be radiated. The surface 706 to be radiated may be relatively wide, e.g. one square metre. The intensity profiles of said optical radiations on different wavelengths comprise at least two kinds of intensity values at different points of the intensity profile. Said optical radiation may be generated with a radiation source or an optical block or both. The radiation source may be e. g. an incandescent lamp, a semiconductor radiation source, a laser radiation source or a xenon radiation source.

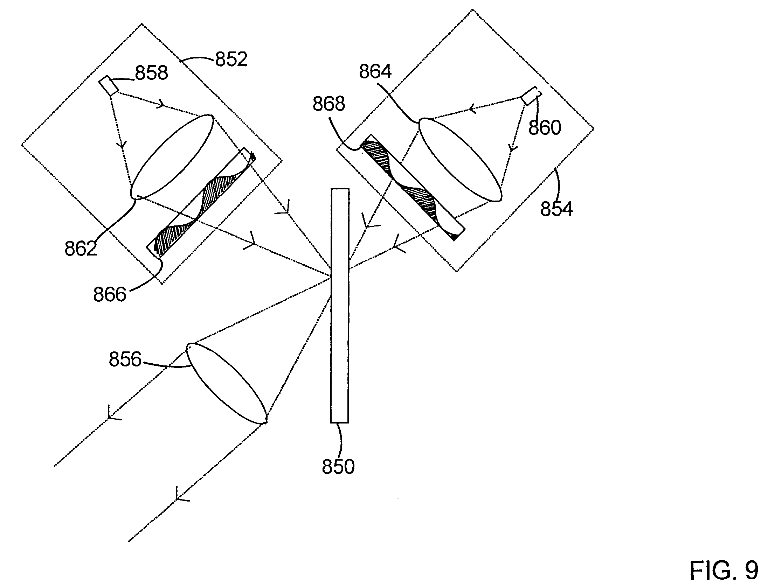

Figure 9 shows an optical block for generating optical radiation comprising for example two sinusoidal optical radiations on different wavelengths. In Figure 9, a dichroic mirror 850 is used to direct the sinusoidal optical radiations generated by two optical blocks 852, 854 to a lens 856. The optical blocks 852, 854 both comprise a radiation source 858, 860 lens 862, 864, and a light mask 866, 868 creating the sine form. The lens 856 parallels the sinusoidal radiations towards the surface of the object.

Referring to Figure 8, the radiated surface is imaged with an imaging block 708 comprising at least one matrix camera. The imaging is carried out at an imaging angle differing from the radiation direction by a known direction difference 710. A matrix camera distinguishes between optical radiations on different wavelengths based on its wavelength selectivity. The above is typically implemented by generating image information on the surface of the object in one imaging by surface areas with respect to both different optical radiations on different wavelengths. The image information generated comprises the intensity values of the optical radiations on different wavelengths for the surface of the object surface area-specifically. In the determination of the height of the surface area of the object, the ratio of said intensity values is created, which determines the point between the intensity profiles. The height of the surface area is determined based on said point between the intensity profiles and on said known direction difference utilizing triangulation for determining the shapes of the surface of the object. If the size of the surface is e.g. one square metre, the size of one surface area may be e.g. one square millimetre. The heights of all surface areas are determined as described above, and the shapes of the surface are thereby determined. If the object is moving, the above operation can be carried out with the movement sensor 126 and the processing unit 128 synchronized such that all the shapes of the moving object are determined. The processing unit may comprise a calibration file in which said known direction difference is input in advance. The calibration file can be utilized in the same way as was described in connection with the first preferred embodiment of the invention.

The third preferred embodiment of the invention can also be implemented with respect to two or more radiation directions, comparing the measurement results of the height of the surface area of the object with respect to the different radiation directions, thereby producing a more accurate measurement result of the height of the surface area to determine the shapes of the surface.

The method according to independent claim 2 can also be implemented utilizing the principle of three illuminations and three measurements disclosed in claim 1.

Although the invention is described above with reference to examples according to the accompanying drawings, it is apparent that the invention is not limited thereto, but can be modified in a variety of ways within the scope of the inventive idea disclosed in the attached claims.

**Claims**

1. A method of determining the shapes of a surface of an object (100), **characterized by**

   radiating optical radiation at a first moment in time to a surface area of the surface of the object from a radiation direction, the radiation being part of optical radiation comprising different intensities at different points of its intensity profile and having a substantially constant intensity profile with respect to time;
   imaging the surface area at said first moment in time to generate image information by performing the imaging from an imaging direction that deviates from said radiation direction by a known direction difference (118);
   radiating optical radiation at least at two other moments in time to the surface area from said radiation direction to radiate the surface area in three different parts of the intensity profile, the radiation being part of said optical radiation having a substantially constant intensity profile with respect to time and being located at a known distance from said radiation part on said intensity profile;
   imaging the surface area at said at least two other moments in time to generate image information by performing the imaging from an imaging direction that deviates from said radiation direction by a known direction difference (122);
   determining the point on the intensity profile from intensity values comprised by the imaging information generated from the radiated surface area at said first moment in time and at said at least two other moments in time, and;
   determining the height of the surface area for determining the shapes of the surface of the object based on said point on the intensity profile, said known direction differences and said known distance.

2. A method of determining the shapes of a surface of an object (100), **characterized by**

   radiating optical radiation from a first radiation direction (400) to a surface area of the surface of the object, the radiation being part of optical radiation comprising different intensities at different points of its intensity profile and having a substantially constant intensity profile with respect to time;
radiating optical radiation to the surface area from said first radiation direction, the radiation being part of said optical radiation having a substantially constant intensity profile with respect to time and being located at a known distance from said radiation part on said intensity profile;
radiating optical radiation to the surface area from a second radiation direction (402), which deviates from the first radiation direction, the radiation being part of optical radiation having different intensities at different points of its intensity profile and a substantially constant intensity profile with respect to time;
radiating optical radiation to the surface area from said second radiation direction, the radiation being part of said optical radiation having a substantially constant intensity profile with respect to time and being located at a known distance from said radiation part radiated from the second radiation direction on said intensity profile;
imaging the surface area, radiated with radiation radiated from each said first radiation direction, to generate image information by performing the imaging from one or more imaging directions that deviate from said first radiation direction by a known direction difference;
imaging the surface area, radiated with radiation radiated from each said second radiation direction, to generate image information by performing the imaging from one or more imaging directions that deviate from said second radiation direction by a known direction difference;
generating an intensity value ratio from intensity values comprised by image information generated from the surface area radiated from said first radiation direction to determine the point on the radiation intensity profile of the first radiation direction;
creating a first measurement result of the height of the surface area based on the point on the intensity profile of the radiation of the first radiation direction, the direction difference between said known first radiation direction and the imaging direction and said known distance on the intensity profile of the radiation of the first radiation direction;
generating an intensity value ratio from intensity values comprised by the image information generated from the surface area radiated from said first radiation direction, the ratio determining the point on the intensity profile of the radiation from the first radiation direction;
creating a second measurement result of the height of the surface area based on the point on the intensity profile of the radiation of the second radiation direction, the direction difference between said known second radiation direction and the imaging direction and said known distance on the intensity profile of the radiation of the second radiation direction;
comparing said first and second measurement results to determine the height of the surface area for determining the shapes of the surface of the object.

3. A method of determining the shapes of a surface of an object (100), **characterized by**

radiating optical radiation on the surface of the object from one or more radiation directions, the radiation comprising optical radiation on at least two different wavelengths, the intensity profiles according to the optical radiations on different wavelengths comprising different intensity values at different points of the intensity profile;
imaging the surface of the object to generate surface area specific image information on the surface of the object radiated with optical radiations on said different wavelengths by performing the imaging from an imaging angle that deviates from said radiation direction by a known direction difference (710);
generating the ratio of intensity values comprised by the image information, the ratio determining the point between said intensity profiles, and;
determining the height of the surface area based on said point and said known direction difference for determining the shapes of the surface of the object.

4. A method as claimed in claim 1, 2 or 3, **characterized in that** there is a movement between the object (100) and intensity profile of the optical radiation.

5. A method as claimed in claim 4, **characterized by** measuring the movement between the object (100) and the intensity profile of the optical radiation to generate control information.

6. A method as claimed in claim 5, **characterized by** controlling the imaging of the surface area based on the control information.

7. A method as claimed in claim 1, 2 or 3, **characterized by** determining the height of the surface area utilizing triangulation.

8. A method as claimed in claim 1 or 2, **characterized by** inputting the known at least one direction difference and the known at least one distance on the intensity profile in advance in a calibration file.

9. A method as claimed in claim 3, **characterized by** inputting the known at least one direction difference in advance in a calibration file.

10. A method as claimed in claim 1 or 2, **characterized in that** the area of the surface area is between 0.001 and 25 square millimetres.

11. A method as claimed in claim 10, **characterized in that** the area of the surface area is between 0.01 and 1 square millimetres.

12. A method as claimed in claim 1 or 2, **characterized in that** the intensity profile is sinusoidal, and the known distance on the intensity profile is the known size of the phase shift on the sinusoidal intensity profile.

13. A method as claimed in claim 1, 2 or 3, **characterized in that** the known direction difference is a deviation of at least 5 degrees from a 0 to 2-fold multiple of a quadrant.

14. A method as claimed in claim 13, **characterized in that** the known direction difference is preferably a deviation of at least 20 to 30 degrees from a 0 to 2-fold multiple of a quadrant.

15. An arrangement for determining the shapes of a surface of an object (100), **characterized in that** the arrangement comprises:

at least one radiation source (104) for generating optical radiation comprising different intensities at different points of an intensity profile and having a substantially constant intensity profile, part of which radiation is used to radiate a surface area of the surface of the object from a radiation direction at a first moment in time, and the surface area is radiated with a radiation part located at a known distance from said radiation part on said intensity profile from said radiation direction at least at two other moments in time;
an imaging block (108) for imaging the surface area at said first moment in time to generate image information and at said at least two other moments in time to generate image information by performing the imaging from an imaging direction that deviates from said radiation direction by a known direction difference (118, 122), and;
a processing unit (128) for determining the height of the surface area to determine the shapes of the surface of the object, in which determination of the height of the surface area the ratio of intensity values comprised by the image information is generated and the ratio determines the point on the intensity profile, arid the height of the surface area is determined based on said point on the intensity profile, said known distance and said known direction difference.

16. An arrangement for determining the shapes of a surface of an object (100), **characterized in that** the arrangement comprises:

at least one radiation source (403) for generating optical radiation comprising different intensities at different points of an intensity profile and having a substantially constant intensity profile, part of which radiation is used to radiate a surface area of the surface of the object from a first radiation direction (400), and the surface area is radiated with a radiation part located at a known distance from said radiation part on said intensity profile from said first radiation direction;

at least one radiation source (407) for generating optical radiation comprising different intensities at different points of an intensity profile and having a substantially constant intensity profile, part of which radiation is used to radiate a surface area of the surface of the object from a second radiation direction (402), and the surface area is radiated with a radiation part located at a known distance from said radiation part on said intensity profile from said second radiation direction;

an imaging block (108) for imaging the surface area to generate image information on the surface area radiated with each said radiation part from the first radiation direction and from said second radiation direction by performing the imaging from one or more imaging directions that deviate from said first and second radiation directions by a known direction difference, and;

a processing unit (128), whose first task is to generate a first measurement result of the height of the surface area, in which generation of the first measurement result the ratio of intensity values comprised by the image information generated from the surface area radiated from said first radiation direction, the ratio determining the point on the intensity profile of the first radiation direction, and the first measurement result is generated based on said point on the intensity profile of the radiation from the first radiation direction, said known distance on the intensity profile of the first radiation direction and said known direction difference between the first radiation direction and the imaging direction, a second task of the processing unit (128) being to generate a second measurement result of the height of the surface area, in which generation of the second measurement result the ratio of intensity values comprised by the image information generated from the surface area radiated from said second radiation direction, the ratio determining the point on the intensity profile of the second radiation direction, and the second measurement result is generated based on said point on the intensity profile of the radiation from the second radiation direction, said known distance on the intensity profile of the second radiation direction and said known direction difference between the second radiation direction and the imaging direction, and a third task of the processing unit (128) being to compare the first measurement result with the second measurement result to determine the height of the surface area for determining the shapes of the surface of the object.

17. An arrangement for determining the shapes of a surface of an object (100), **characterized in that** the arrangement comprises:

at least one radiation source (700) for radiating the surface of the object with optical radiation comprising optical radiation on at least two different wavelengths and comprising different intensity values at different points of their intensity profiles;

an imaging block (708) for imaging the surface of the object to generate image information on the surface of the object by surface areas radiated with optical radiation on each said different wavelength by performing the imaging at an imaging angle that deviates from the radiation direction by a known direction difference (710), and;

a processing unit (128) for determining the height of the surface area for determining the shapes of the surface of the object, in which determination of the height of the surface area the ratio of the intensity values comprised by the image information is generated, the ratio determining the point between said intensity profiles, the height of the surface area being determined based on said point and said known direction difference.

18. An arrangement as claimed in claim 15, 16 or 17, **charac- terized** in that there is a movement between the object (100) and the intensity profile of the optical radiation.

**19.** An arrangement as claimed in claim 15, 16 or 17, **characterized in that** the arrangement comprises a movement sensor (126) for measuring the movement between the object (100) and the intensity profile of the optical radiation to generate control information.

**20.** An arrangement as claimed in claim 15, 16 or 17, **characterized in that** the arrangement comprises a processing unit (128) for controlling the imaging block (108, 708) based on control information.

**21.** An arrangement as claimed in claim 15, 16 or 17, **characterized in that** the arrangement comprises an imaging block (108, 708) for controlling the imaging based on control information. controlling the imaging based on control information.

**22.** An arrangement as claimed in claim 15, 16 or 17, **characterized in that** the arrangement comprises a processing unit (128) for determining the height of the surface area by utilizing triangulation.

**23.** An arrangement as claimed in claim 15 or 16, **characterized in that** the processing unit (128) comprises a calibration file, in which the known at least one direction difference and the known at least one distance on the intensity profile are input in advance.

**24.** An arrangement as claimed in claim 17, **characterized in that** the processing unit (128) comprises a calibration file, in which the known at least one direction difference is input in advance.

**25.** An arrangement as claimed in claim 15 or 16, **characterized in that** the area of the surface area is between 0.001 and 25 square millimetres.

**26.** An arrangement as claimed in claim 15 or 16, **characterized in that** the area of the surface area is between 0.01 and 1 square millimetres.

**27.** An arrangement as claimed in claim 15 or 16, **characterized in that** the arrangement comprises at least one radiation source (104, 403) for radiating the surface of the object (100) with optical radiation having a sinusoidal intensity profile, and the known distance on the intensity profile is a known size of the phase shift on a sinusoidal intensity profile.

**28.** An arrangement as claimed in claim 15, 16 or 17, **characterized in that** the known direction difference is a deviation of at least 5 degrees from a 0 to 2-fold multiple of a quadrant.

**29.** An arrangement as claimed in claim 28, **characterized in that** the known direction difference is a deviation of preferably at least 20 to 30 degrees from a 0 to 2-fold multiple of a quadrant.

**30.** An arrangement as claimed in claim 15 or 16, **characterized in that** the imaging block (108) comprises at least two line cameras.

**31.** An arrangement as claimed in claim 17, **characterized in that** the imaging block (708) comprises at least one matrix camera.

FIG. 1

PU

128

104

106

102

100

B

126

112

108

110

122

119

118

114

108

A

FIG. 2

FIG. 3

EP 1 170 572 A2

FIG. 4

FIG. 5

FIG. 6

FIG. 7

FIG. 8

FIG. 9

EP 1 170 572 A2